# EUROPÄISCHE PATENTANMELDUNG

(11) **EP 2 154 448 A2**
(43) Veröffentlichungstag der Anmeldung: **17.02.2010**
(21) Anmeldenummer: 09167431.7
(22) Anmeldetag: 07.08.2009
(51) Int. Cl.: F24J 2/46, F24J 2/50

(54) **Solarkollektor mit Absorber und Absorberüberhitzungsschutz**

(30) Priorität: 13.08.2008 DE 102008038794; 13.08.2008 DE 102008038795
(71) Anmelder: Robert Bosch GmbH, 70469 Stuttgart (DE)
(72) Erfinder: Polster, Steffen, 70199, Stuttgart (DE); Stumpp, Hermann, 73730, Esslingen (DE); Fraune, Michael, 70499, Stuttgart (DE); Feuerfeil, Rainer, 70839, Gerlingen (DE); Clement, Uwe, 73114, Schlat (DE)

(57) **Zusammenfassung**

Solarkollektorgrundkörper (4) für einen Solarkollektor und einen Solarkollektor, insbesondere einen vollflächig durchströmbaren Solarkollektor, mit einem Solarkollektorgrundkörper mit einer mittels einer Absorberabdeckscheibe (1) begrenzbaren Absorberaufnahme und einem Absorberüberhitzungsschutz (2) zur Vermeidung einer Absorberüberhitzung.

Es ist eine Aufgabe der Erfindung, einen verbesserten Solarkollektorgrundkörper und einen verbesserten Solarkollektor zu schaffen, welche die Stagnationstemperatur auf einen vorgebbaren Wert begrenzen. Insbesondere ist es eine Aufgabe, die Stagnationstemperatur so zu begrenzen, dass Kunststoffe mit niedrigen Schmelzpunkten als Kollektormaterial verwendbar sind.

Gekennzeichnet sind der Solarkollektorgrundkörper (4) für einen Solarkollektor und der Solarkollektor dadurch, dass der Absorberüberhitzungsschutz (2) als eine selektiv reflektierende Beschichtung an der Absorberabdeckscheibe ausgebildet ist.

## Beschreibung

### Stand der Technik

Die Erfindung betrifft einen Solarkollektorgrundkörper für einen Solarkollektor, insbesondere einen Flachkollektor, nach dem Oberbegriff des Patentanspruches 1. Weiter betrifft die Erfindung einen Solarkollektor, insbesondere einen vollflächig durchströmbaren Solarkollektor nach dem Oberbegriff des Patentanspruches 12.

Allgemein bekannt sind aus dem Stand der Technik Solarkollektoren, welche ein durch den Solarkollektor durchströmendes Fluid zur Wärmegewinnung erwärmen. In thermischen Solarkollektoren gemäß dem Stand der Technik wird das durchströmende Kollektor- oder Solarfluid durch die einfallende Solarstrahlung erwärmt. Derartige Solarkollektoren umfassen daher üblicherweise einen Absorber zur Aufnahme der Energie einfallender Sonnenstrahlen. Leitungen oder dergleichen, welche von dem Kollektor- oder Solarfluid durchströmt werden, sind in dem Absorber eingebettet. Aufgrund seiner Eigentemperatur gibt der Absorber auch Wärme ab. In einem Stagnationsfall sind die Wärmeverluste, welche an die Umgebung abgegeben werden, etwa genauso groß wie die eingestrahlte Sonnenenergie. Je effektiver ein Solarkollektor die Solarstrahlung in Wärmeenergie umwandelt, umso höher liegt in der Regel die Temperatur im Stagnationsfall. Die Temperatur im Stagnationsfall liegt bei gängigen Flachkollektoren, hohen Außenlufttemperaturen und maximaler Solarstrahlung üblicherweise zwischen 180 °C und 230 °C, so dass sich diese schädlich auf den Solarkollektor auswirkt. Kollektormaterialien und Kollektorfluid müssen für diese hohen Temperaturen ausgelegt werden, sind somit kosten- und arbeitsintensiv und verschleißen schneller. Das Kollektorfluid, welches üblicherweise eine Wasser-Glykol-Mischung umfasst, beginnt sich bei hohen Temperaturen zu zersetzen.

Zur Erhöhung des Wirkungsgrades werden auf den Absorbern solarthermischer Kollektoren flächendeckende selektive Beschichtungen eingesetzt, welche die Absorption der Sonneneinstrahlung maximieren und den Verlust durch infrarote Wärmestrahlung minimieren. Geeignete Beschichtungen sind als sogenannte Low-E-Schichten und Low-E-Schichtsysteme bekannt, wobei Low-E ausgeschrieben low emissivity bedeutet. Sie besitzen bei hoher Transmission im solaren Teil des Spektrums im infraroten Spektralbereich größer 2,5 Mikrometer (µm) eine hohe Reflexion und eine damit verbundene niedrige Emissivität. Dadurch wirken sie als gute Reflektoren für Wärmestrahlung und verleihen Glas und durchsichtigen Polymerfolien sehr gute Wärmedämmeigenschaften, die sie ohne eine solche Beschichtung nicht hätten. Ein typischer Vertreter der homogenen Low-E-Schichten ist beispielsweise eine Schicht aus In₂O₃:Sn (ITO). Ein typischer Vertreter von Low-E-Schichtsysteme ist ein System aus Schichten, in das als Funktionsschicht eine solche aus Silber eingeschlossen ist. In den Schichtsystemen werden anstelle der Silberschicht auch Gold- oder Kupferschichten zur Erzeugung der hohen Reflexion im infraroten Spektralbereich eingesetzt.

Diese Schichten haben den Nachteil, dass der beschichtete Absorber im Stagnationsfall, wenn der Kollektor nicht durchströmt wird, die Sonne jedoch scheint, sich stark erhitzt, bis über 200 °C. Ohne die Wärmeverluste durch Strahlung einzudämmen, würde der Wirkungsgrad jedoch stark absinken und der solare Jahresertrag kleiner ausfallen. Eine Reduzierung der Infrarotverluste ist daher zwingend erforderlich. Damit der Absorber nicht überhitzt, gibt es verschiedene Lösungen, die sich grob in drei Kategorien unterteilen lassen: Maßnahmen, welche die einfallende Sonnenstrahlung beeinflussen, Maßnahmen, welche die Wärmeverluste des Kollektors beeinflussen, und Kühlsysteme, die für einen ständigen Wärmeabtransport sorgen. Bekannte statische Verfahren für einen Überhitzungsschutz sind darauf optimiert, möglichst die gesamten Wärmeverluste zu minimieren, um damit ein niedriges Emissionsvermögen und somit gute Reflexionseigenschaft für Wellenlängen größer als 2,5 µm zu realisieren. Dies hat zur Folge, dass das Emissionsvermögen unabhängig von der Temperatur ist, welche der Absorber annehmen kann.

### Offenbarung der Erfindung

Der Erfindung liegt die Aufgabe zugrunde, einen verbesserten Solarkollektorgrundkörper und einen verbesserten Solarkollektor zu schaffen, welche einen statischen Absorberüberhitzungsschutz aufweisen, der auf eine vorgebbare maximale Absorbertemperatur einstellbar ist, also mit dem die Stagnationstemperatur auf einen vorgebbaren Wert begrenzt werden kann. Insbesondere ist es eine Aufgabe, die Stagnationstemperatur so zu begrenzen, dass Kunststoffe mit niedrigen Schmelzpunkten als Kollektormaterial verwendbar sind.

Erfindungsgemäß wird dies durch die Gegenstände mit den Merkmalen des Patentanspruches 1 und des Patentanspruchs 12 gelöst. Vorteilhafte Weiterbildungen sind den Unteransprüchen zu entnehmen.

Der erfindungsgemäße Solarkollektorgrundkörper für einen Solarkollektor, insbesondere einen Flachkollektor, mit einer mittels einer Absorberabdeckscheibe begrenzbaren Absorberaufnahme und einem Absorberüberhitzungsschutz zur Vermeidung einer Absorberüberhitzung, ist dadurch gekennzeichnet, dass der Absorberüberhitzungsschutz als eine selektiv reflektierende Beschichtung an der Absorberabdeckscheibe ausgebildet ist. Die Beschichtung ist insbesondere transparent, lässt Solarstrahlung einstrahlen und kann an einer Absorberabdeckscheibe angebracht sein, die bevorzugt aus einem transparenten Material wie Glas, Floatglas, Kunststoff oder dergleichen ausgebildet ist. Aus Gründen der Lebensdauer kann die Beschichtung an einer einem Absorber zugewandten Seite der Absorberabdeckscheibe ausgebildet sein.

In einer Ausführungsform der vorliegenden Erfindung ist vorgesehen, dass die Beschichtung mindestens ein mikrostrukturiertes Metallgitter aufweist, welches eine in Abhängigkeit einer Absorbertemperatur veränderbare Emissivität des Solarkollektors bewirkt und/oder mit welchem eine Reflexionseigenschaft der Beschichtung einstellbar ist.

In noch einer weiteren Ausführungsform der vorliegenden Erfindung ist vorgesehen, dass die Beschichtung ein Reflexionsvermögen von Wellenlängen etwa größer gleich 7 µm aufweist.

Bei einer weiteren Ausführungsform der vorliegenden Erfindung ist vorgesehen, dass die Beschichtung an einem vorbestimmbaren Teilbereich der solardurchlässigen Absorberabdeckscheibe ausgebildet ist, wobei ein Verhältnis von beschichtetem Teilbereich zum unbeschichteten Bereich so ausgewählt ist, dass der Absorber vor Überhitzung geschützt ist.

In noch einer weiteren Ausführungsform der vorliegenden Erfindung ist vorgesehen, dass die Beschichtung an einem vorbestimmbaren Teilbereich der solardurchlässigen Absorberabdeckscheibe ausgebildet ist, wobei ein Verhältnis von beschichtetem Teilbereich zum unbeschichteten Bereich so ausgewählt ist, dass sich eine homogene Absorbertemperatur einstellt.

Weiterhin kann die Beschichtung mehrere Beschichtungsabschnitte aufweisen. Dabei sind die Beschichtungsabschnitte vorzugsweise in einem Muster angeordnet, insbesondere in einem Linienmuster, einem Schachbrettmuster und dergleichen. Zudem können die Beschichtungsabschnitte in einer Form ausgebildet sein, insbesondere umfassend geometrische Formen wie Quadrate, Dreiecke, Kreise, Ellipsen, Polygone und dergleichen.

Noch ein anderes Ausführungsbeispiel der vorliegenden Erfindung sieht vor, dass der Abstand zwischen zwei Beschichtungsabschnitten so ausgewählt ist, dass der Bereich darunter temperaturspitzenfrei ausgebildet ist und sich insbesondere darunter keine Temperaturspitzen wie Hotspots bilden. Insbesondere kann der Abstand zwischen benachbarten Beschichtungsabschnitten weniger als einige Millimeter bis hin zu mehr als einigen Zentimetern betragen.

Die Dicke der Beschichtung kann derart gewählt sein, dass diese mit Standardbeschichtungsverfahren auf der Absorberabdeckscheibe ausbildbar ist, wobei dafür Standardbeschichtungstechniken wie Maskenverfahren, Druckverfahren Ätzverfahren, Sputterverfahren, Sol-Gel-Verfahren und dergleichen denkbar sind.

Der erfindungsgemäße Solarkollektor, insbesondere ein vollflächig durchströmbarer Solarkollektor, mit einem Solarkollektorgrundkörper, ist dadurch gekennzeichnet, dass der Solarkollektorgrundkörper als erfindungsgemäßer Solarkollektorgrundkörper nach einem der vorherigen Ansprüche ausgebildet ist.

Mit dem erfindungsgemäßen Solarkollektorgrundkörper und dem erfindungsgemäßen Solarkollektor wird ein sicherer Absorberüberhitzungsschutz realisierbar, welcher den Einsatz von Kunststoffen als Absorberwerkstoff ermöglicht. Der Absorberüberhitzungsschutz verhindert effektiv eine Beeinträchtigung von Kunststoff aufgrund einfallender Solarstrahlung und einem damit verbundenen Temperaturanstieg an dem Absorber. Zudem ist der Absorberüberhitzungsschutz einfach aufgebaut und lässt sich leicht auf der Absorberabdeckscheibe anbringen, insbesondere an einer Glas-Absorberabdeckscheibe. Bei dem erfindungsgemäßen Absorberüberhitzungsschutz handelt es sich um ein statisches System. Es gibt keine beweglichen Teile oder Mechanismen, sodass kein oder nur ein unwesentlicher Verschleiß auftreten kann. Somit ist eine hohe Langzeitstabilität des Absorberüberhitzungsschutzes und somit auch des Absorbers und des Solarkollektorgrundkörpers gewährleistet. Dadurch, dass keine beweglichen Teile für den Überhitzungsschutz erforderlich sind, ist auch keine Fremdenergie wie zusätzliche elektrische Energie erforderlich, sodass ein effektiver und energiesparender Überhitzungsschutz realisiert ist. Für den Überhitzungsschutz lässt sich die Beschichtung so einstellen, insbesondere durch geeignete Auslegung der Metallgitter oder Gestaltung der Low-E-Schichten (es lassen sich alle bekannten Low-E-Schichten entsprechend anpassen), dass eine maximale Absorbertemperatur gezielt für möglicherweise auftretende, ungünstigste Betriebsbedingungen eingestellt werden kann. Die erfindungsgemäße Beschichtung bewirkt insbesondere eine geringe Emissivität des Solarkollektors während des Betriebes und weist eine hohe Emissivität mit daraus folgenden relativ niedrigeren Stagnationstemperaturen während des Stillstandes auf.

Die Zeichnungen stellen Ausführungsbeispiele der Erfindung dar. Es zeigt:
- Fig. 1: ein Diagramm mit Kennlinien von verschiedenen Kollektoren, bei dem ein Kollek- torwirkungsgrad über einer Absorbertemperatur aufgetragen ist,
- Fig. 2: schematisch eine Draufsicht auf eine Absorberabdeckscheibe mit einem erfin- dungsgemäßen Absorberüberhitzungsschutz,
- Fig. 3: schematisch in einer Querschnittsansicht einen Ausschnitt eines ersten Ausfüh- rungsbeispiels eines Solarkollektorgrundkörpers,
- Fig. 4: schematisch in einer Querschnittsansicht einen Ausschnitt eines zweiten Ausfüh- rungsbeispiels eines Solarkollektorgrundkörpers, und
- Fig. 5: schematisch eine Sprungkantenverschiebung in einem Diagramm, bei dem ein Wärmestrahlungsspektrum über der Strahlungswellenlänge aufgetragen ist.

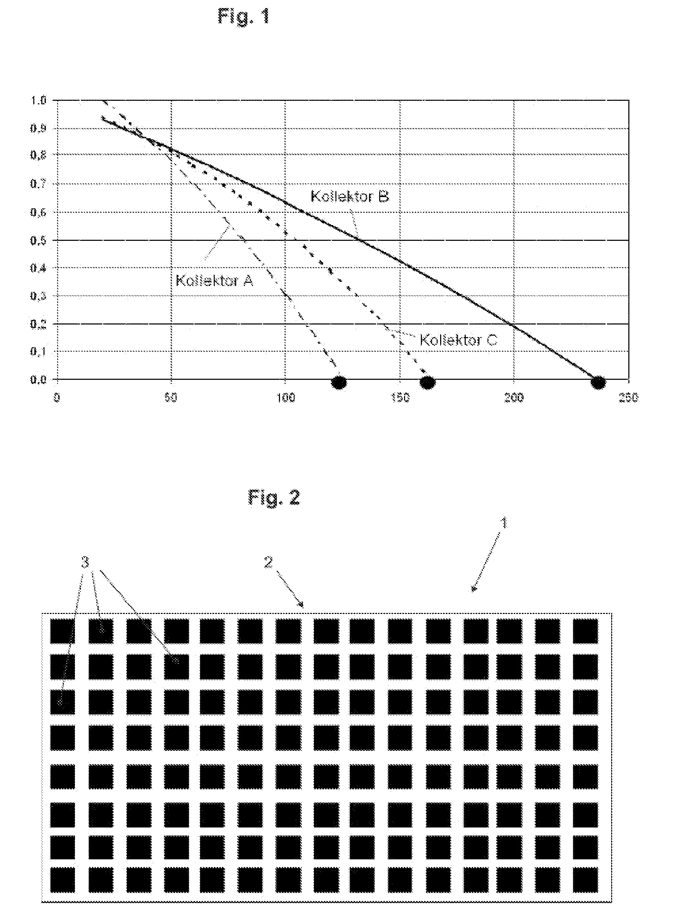

Fig. 1 zeigt ein Diagramm mit Kennlinien von verschiedenen Kollektoren A, B und C, bei dem ein Kollektorwirkungsgrad über einer Absorbertemperatur aufgetragen ist. Auf der Abszisse des Diagramms ist die Absorbertemperatur in °C aufgetragen, auf der Ordinate des Diagramms ist der Kollektorwirkungsgrad aufgetragen. Mit drei unterschiedlichen Linientypen sind die Kennlinien von drei unterschiedlichen Kollektoren A, B, C in das Diagramm eingetragen. An dem Schnittpunkt der jeweiligen Kennlinie mit der Abszisse ist durch einen ausgefüllt dargestellten Punkt die Stagnationstemperatur des jeweiligen Kollektors dargestellt. Die Kollektoren weisen alle nicht selektive Absorber auf. Kollektor A, dessen Kennlinie durch eine Strich-Punkt-Linie dargestellt ist, ist ein Kollektor mit einer unbeschichteten Absorberabdeckscheibe und folglich hohen Wärmeverlusten. Der mit Kollektor A zu erzielende Ertrag ist eher als niedrig einzustufen, was durch die relativ steil abfallende, leicht konkav verlaufende Kurve von einem Wirkungsgrad 0,85 bei etwa 40 °C auf einen Wirkungsgrad von 0,0 bei etwa 125 °C, deutlich wird. Einen flacheren Abfall weist die Kennlinie von Kollektor B auf. Kollektor B ist ein Kollektor mit einer vollflächig beschichteten Absorberabdeckscheibe. Hierdurch weist der Kollektor B stark reduzierte Wärmeverluste auf, jedoch stellt sich für den Kollektor B eine hohe Absorbertemperatur ein. Die Kennlinie verläuft von einem Wirkungsgrad knapp unter 0,85 bei etwa 40 °C auf einen Wirkungsgrad 0,0 bei etwa 250 °C, der Stagnationstemperatur.

Die Kennlinie von Kollektor C, dargestellt durch die gestrichelte Linie, verläuft im Wesentlichen zwischen den Kennlinien von Kollektor A und Kollektor B. Kollektor C weist eine Absorberabdeckscheibe mit einem Muster an beschichteten und unbeschichteten Bereichen, also mit Low-e-Schicht und ohne Low-e-Schicht, auf. Diese sind so eingestellt, dass Wärmeverluste reduziert sind. Durch dieses Muster lässt sich ein effektiver Arbeitsbereich des Solarkollektors einstellen, der zwischen den ineffektiven Bereichen der Kollektoren A und B liegt. Die Kennlinie von Kollektor C verläuft ebenfalls leicht konkav fallend von einem Wirkungsgrad knapp unter 0,85 bei 40°C auf einen Wirkungsgrad von 0,0 bei etwa 160 °C, der entsprechenden Stagnationstemperatur des Kollektors C. Eine mögliche Ausführungsform des Kollektors C ist in Fig. 2 näher dargestellt.

Fig. 2 zeigt schematisch eine Draufsicht auf eine Absorberabdeckscheibe 1 mit einem erfindungsgemäßen Absorberüberhitzungsschutz 2. Die Absorberabdeckscheibe 1 weist in der Draufsicht eine rechteckige Kontur auf. Der Absorberüberhitzungsschutz 2 ist als Low-e-Beschichtung ausgebildet. Die Beschichtung ist an einer hier nicht dargestellten, dem Absorber zugewandten Seite der Absorberabdeckscheibe 1 angeordnet. In der Figur ist die Beschichtung als mehrteilige Beschichtung ausgebildet, die insbesondere mehrere in der Draufsicht quadratische Beschichtungsabschnitte 3 aufweist. Die Beschichtungsabschnitte 3 weisen vorliegen alle die gleiche Form auf, können aber auch jeweils unterschiedlich ausgebildet sein. Auf der Absorberabdeckscheibe 1 sind die Beschichtungsabschnitte etwa äquidistant voneinander beabstandet angeordnet, sodass die Beschichtung etwa schachbrettartig ausgebildet ist. Das Verhältnis von der beschichteten Fläche zu einer unbeschichteten Fläche der Absorberabdeckscheibe 1 ist so gewählt, dass möglichst eine homogen verteilte Absorbertemperatur erzielt wird und insbesondere der Absorber nicht überhitzt wird. Beispiele für unterschiedlich ausgebildete Muster, insbesondere Abstände zwischen den Beschichtungsabschnitten 3 sind in den beiden folgenden Figuren dargestellt.

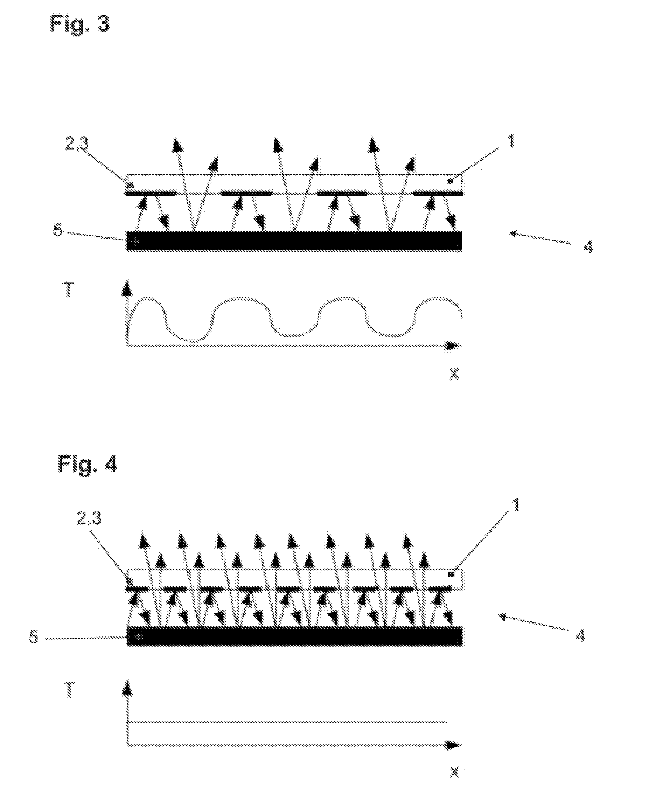

Fig. 3 zeigt schematisch in einer Querschnittsansicht einen Ausschnitt eines ersten Ausführungsbeispiels eines Solarkollektorgrundkörpers 4. Der Ausschnitt des Solarkollektorgrundkörpers 4 umfasst die Absorberabdeckscheibe 1, welche den als mehrteilige Beschichtung ausgebildeten Absorberüberhitzungsschutz 2 aufweist. Beabstandet zu der Absorberabdeckscheibe 1 ist ein Absorber 5 dargestellt, der hier nur ausschnittsweise angedeutet ist. Die Beschichtung ist nach dem in Fig. 2 dargestellten Muster mit entsprechenden Beschichtungsabschnitten 3 ausgebildet. Die Beschichtungsabschnitte 3 sind voneinander beabstandet angeordnet, sodass sich eine alternierende Folge von beschichteter Fläche und unbeschichteter Fläche der Absorberabdeckscheibe 1 ergibt. Durch die in Fig. 3 dargestellten Pfeile P wird eine Strahlung repräsentiert. Grundsätzlich kann die von dem Absorber ausgesendete Strahlung die Beschichtungsabschnitte 3 nicht passieren und wird von dort wieder reflektiert. Durch die nicht beschichtete Fläche der Absorberabdeckscheibe 1 kann die Strahlung durchtreten und an die Umgebung abgegeben werden. Je nachdem, ob die Strahlung durch die Absorberabdeckscheibe abgegeben wird oder nicht, erhöht sich die Temperatur des Absorbers 5, genauer dessen Oberflächentemperatur. Dies ist in dem Temperaturdiagramm der Fig. 3, welches eine Temperatur über eine Strecke x aufträgt, dargestellt. Die Strecke x entspricht dem darüber abgebildeten Streckenabschnitt des Solarkollektorgrundkörpers 4. Wie an dem Temperaturverlauf in dem Temperaturdiagramm zu erkennen ist, kommt es in dem Bereich, in dem die Strahlung von den Beschichtungsabschnitten reflektiert wird, zu lokalen Temperaturanstiegen, sogenannten Hotspots. Die Oberflächentemperatur des Absorbers 5 ist somit inhomogen, das heißt stark schwankend. Um eine homogene Oberflächentemperatur des Absorbers zu realisieren, ist eine andere Geometrie des Musters zu wählen, insbesondere ein anderer Abstand zwischen den Beschichtungsabschnitten 3. Eine mögliche Ausführungsform mit geeigneten Abständen ist in Fig. 4 wiedergegeben.

Fig. 4 zeigt schematisch in einer Querschnittsansicht einen Ausschnitt eines zweiten Ausführungsbeispiels eines Solarkollektorgrundkörpers 4. Der Solarkollektorgrundkörper nach Figur 4 unterscheidet sich von dem Solarkollektorgrundkörper ausschließlich in dem gewählten Muster der Beschichtungsabschnitte 3, insbesondere deren Abstand zueinander und deren Ausdehnung, insbesondere in der dargestellten Richtung bzw. Strecke x, welche auch in dem zugehörigen Temperaturdiagramm wiedergegeben ist. Gemäß Fig. 4 sind die Beschichtungsabschnitte 3 in x-Richtung kürzer und die Abstände zwischen benachbarten Beschichtungsabschnitten 3 sind ebenfalls kürzer, sodass auf der gleichen Strecke x wie in Fig. 3 mehrere Beschichtungsabschnitte 3 angeordnet sind. Im vorliegenden Beispiel etwa im Verhältnis 4:9. Durch das entsprechend gewählte Verhältnis lässt sich eine homogene Oberflächentemperatur des Absorbers 5 einstellen, wie das zugehörige Temperaturdiagramm, das dem nach Fig. 3 entspricht, zeigt. In dem Temperaturdiagramm ist der Temperaturverlauf als horizontale Linie ausgebildet, ohne lokale Temperaturmaxima oder -minima, das heißt ohne Temperaturschwankungen.

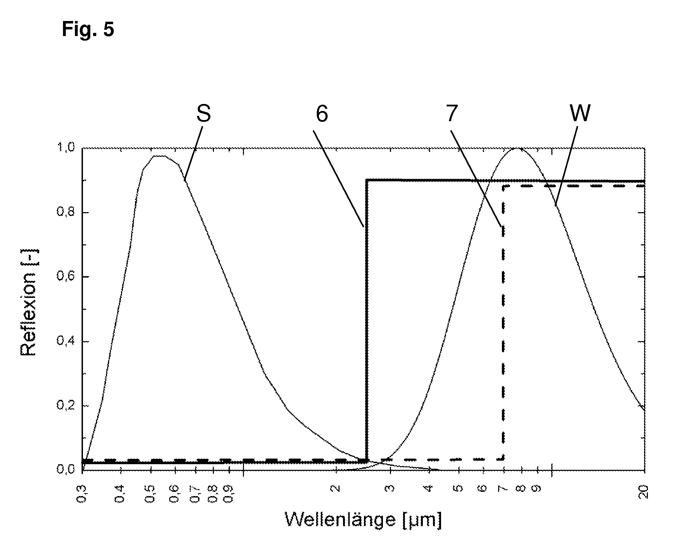

Fig. 5 zeigt in einem Diagramm ein über die Strahlungswellenlänge aufgetragenes Wärmestrahlungsspektrum. Dargestellt ist ein Sonnenspektrum S mit einem bis 2,5 µm etwa sinusförmigen Verlauf. Die Wärmestrahlung, gekennzeichnet durch Bezugszeichen W beträgt etwa 373 K. Weiter dargestellt ist eine erste Sprungkante 6, die als stufenförmige durchgezogene Linie abgebildet ist, mit einem Sprung bei etwa 2,5 µm. Zudem ist eine zweite Sprungkante 7 dargestellt, die ebenfalls als stufenförmige Linie, jedoch als gestrichelte Linie abgebildet ist. Der Sprung der zweiten Sprungkante 7 liegt bei etwa 7 µm. Die Sprungkanten 6, 7 lassen sich über metallische Gitter einstellen.
Systemsimulationen solarthermischer Anlagen zeigen, dass Absorbertemperaturen von maximal 100-120 °C während des Betriebes der solarthermischen Anlagen wie Solarkollektoren erreicht werden. Um nun die Emissivität, das heißt die Wärmeverluste, des Kollektors bis zu diesen Temperaturen möglichst gering zu halten ist bis zu Temperaturen von etwa größer 100 °C ein niedriger Wärmeverlust wünschenswert. Bei Temperaturen größer etwa 100 °C sollen jedoch die Wärmeverluste ansteigen, sodass die nicht benötigte Wärme während des Stillstandes der Anlage bei gleichzeitiger Sonneneinstrahlung an die Umgebung abgegeben wird. Dadurch können hohe Stagnationstemperaturen des Absorbers vermieden werden. Um dies zu erreichen, ist eine infrarotreflektierende Schicht vorgesehen, welche ein Reflexionsvermögen größer etwa 7 µm Wellenlänge aufweist (Kollektor B oder Fig. 5). Bei Temperaturen kleiner etwa 100 °C wird die vom Absorber abgestrahlte Wärmestrahlung durch die zum Beispiel auf der Glasabdeckung aufgebrachte Beschichtung größtenteils zurückreflektiert und verbleibt innerhalb des Kollektors. Mit steigenden Temperaturen größer etwa 100 °C verschiebt sich das Spektrum der Wärmestrahlung zu kleineren Wellenlängen hin, sodass diese nicht mehr komplett von der Beschichtung reflektiert werden können, sondern diese zum größten Teil durch die Absorberabdeckplatte durchgelassen werden. Dieser Effekt verstärkt sich, je höher die Temperatur des Absorbers ist.

Durch das Verschieben der Sprungkante von 2,5 µm (Kollektor A) hin zu größeren Wellenlängen (Kollektor B, Fig. 5) erhöht sich auch der Wärmeverlust während des Betriebes. Jedoch sind diese Verluste derart gering, dass sie sich kaum auf den solaren Jahresertrag auswirken. Somit lässt sich die Stagnationstemperatur senken, ohne den solaren Jahresertrag signifikant zu senken. Mit Hilfe von mikrostrukturierten, elektrisch leitenden Gittern lässt sich die erforderliche Sprungkante genügend genau einstellen. Abhängig von der Breite und des Abstands des Gitters kann die Sprungkante und auch die entsprechende Steigung variiert werden. Derartige mikrostrukturierte Metallgitter sind teilweise aus anderen technischen Bereichen bekannt. Bei der Anwendung auf Solarkollektoren sind spezielle betriebsbedingte Einstellungen der Gitter erforderlich, welche insbesondere speziell abgestimmte Gitterabstände erfordern, die auf den entsprechenden Auslegungsfall angepasst sind. Beispiele hierfür sind die Sprungkanten bei 2,5 µm und 7 µm, wobei auch andere Sprungkanten einstellbar sind. Der Vorteil der speziellen Auslegung der Metallgitter liegt darin, dass die Reflexionseigenschaft genau über die Breite und den Abstand der Metallstege der Metallgitter definierbar ist.
Durch entsprechende Wahl der Sprungwellenlänge lassen sich erfindungsgemäß die Wärmeverluste durch Strahlung mit zunehmenden Temperaturen erhöhen. Der Grundgedanke liegt darin, dass das Spektrum der Wärmestrahlung mit zunehmender Strahlungstemperatur von hohen Wellenlängen hin zu Niedrigen wandert und absolut zunimmt. In einem für den Betrieb von Solarkollektoren relevanten Temperaturbereich unter etwa 100 °C liegt das abstrahlende Spektrum bei einer Wahl der Sprungkante von 7 µm Wellenlänge noch zum größten Teil im Bereich mit geringen Strahlungsverlusten. Erwärmt sich der Absorber bei Stagnation weiter, schiebt sich das Spektrum nach links in einen Bereich, in dem Wärmeverluste durch Strahlung ermöglicht werden. Da der Strahlungsanteil nach dem Gesetz von Stefan-Boltzmann bei zunehmender Temperatur auch mit der 4. Potenz absolut größer wird, werden die Strahlungsverluste deutlich überproportional erhöht. Dies führt zu einer deutlichen Reduktion der maximal möglichen Stagnationstemperatur bei sehr kleinen Mehrverlusten während des Betriebes, wie dies auch in Fig. 1 anhand der Kennlinie (Kollektor B) ersichtlich ist.

## Patentansprüche

1. Solarkollektorgrundkörper (4) für einen Solarkollektor, insbesondere einen Flachkollektor, mit einer mittels einer Absorberabdeckscheibe (1) begrenzbaren Absorberaufnahme und einem Absorberüberhitzungsschutz (2) zur Vermeidung einer Absorberüberhitzung, **dadurch gekennzeichnet, dass** der Absorberüberhitzungsschutz (2) als eine selektiv reflektierende Beschichtung an der Absorberabdeckscheibe (1) ausgebildet ist.

2. Solarkollektorgrundkörper (4) nach Anspruch 1,
**dadurch gekennzeichnet, dass** die Beschichtung an einer einem Absorber (5) zugewandten Seite der Absorberabdeckscheibe (1) ausgebildet ist.

3. Solarkollektorgrundkörper (4) nach Anspruch 1 oder 2,
**dadurch gekennzeichnet, dass** die Beschichtung mindestens ein mikrostrukturiertes Metallgitter aufweist, welches eine in Abhängigkeit einer Absorbertemperatur veränderbare Emissivität des Solarkollektors bewirkt und/oder mit welchem eine Reflexionseigenschaft der Beschichtung einstellbar ist.

4. Solarkollektorgrundkörper (4) nach einem der Ansprüche 1 bis 3,
**dadurch gekennzeichnet, dass** die Beschichtung ein Reflexionsvermögen von Wellenlängen etwa größer gleich 7 µm aufweist.

5. Solarkollektorgrundkörper (4) nach einem der Ansprüche 1 bis 4,
**dadurch gekennzeichnet, dass** die Beschichtung an einem vorbestimmbaren Teilbereich der solardurchlässigen Absorberabdeckscheibe (1) ausgebildet ist, wobei ein Verhältnis von beschichtetem Teilbereich zum unbeschichteten Bereich so ausgewählt ist, dass der Absorber (5) vor Überhitzung geschützt ist.

6. Solarkollektorgrundkörper (4) nach einem der Ansprüche 1 bis 5,
**dadurch gekennzeichnet, dass** die Beschichtung an einem vorbestimmbaren Teilbereich der solardurchlässigen Absorberabdeckscheibe (1) ausgebildet ist, wobei ein Verhältnis von beschichtetem Teilbereich zum unbeschichteten Bereich so ausgewählt ist, dass sich eine homogene Absorbertemperatur einstellt.

7. Solarkollektorgrundkörper (4) nach einem der Ansprüche 1 bis 6,
**dadurch gekennzeichnet, dass** die Beschichtung mehrere zueinander beabstandete Beschichtungsabschnitte (3) aufweist.

8. Solarkollektorgrundkörper (4) nach einem der Ansprüche 1 bis 7,
**dadurch gekennzeichnet, dass** die Beschichtungsabschnitte (3) in einem Muster angeordnet sind, umfassend ein Linienmuster, ein Schachbrettmuster und dergleichen.

9. Solarkollektorgrundkörper (4) nach einem der Ansprüche 1 bis 8,
**dadurch gekennzeichnet, dass** die Beschichtungsabschnitte (3) in einer Form ausgebildet sind, umfassend geometrische Formen wie Quadrate, Dreiecke, Kreise, Ellipsen, Polygone und dergleichen.

10. Solarkollektorgrundkörper (4) nach einem der Ansprüche 1 bis 9,
**dadurch gekennzeichnet, dass** der Abstand zwischen zwei benachbarten Beschichtungsabschnitten (3) so ausgewählt ist, dass der Bereich darunter temperaturspitzenfrei ausgebildet ist.

11. Solarkollektorgrundkörper (4) nach einem der Ansprüche 1 bis 10,
**dadurch gekennzeichnet, dass** die Dicke der Beschichtung derart gewählt ist, dass diese mit Standardbeschichtungsverfahren auf der Absorberabdeckscheibe (1) ausbildbar ist, umfassend Standardbeschichtungstechniken wie Maskenverfahren, Druckverfahren, Ätzverfahren, Sputterverfahren, Sol-Gel-Verfahren und dergleichen.

12. Solarkollektor, insbesondere vollflächig durchströmbarer Solarkollektor, mit einem Solarkollektorgrundkörper (4),
**dadurch gekennzeichnet, dass** der Solarkollektorgrundkörper (4) nach einem der Ansprüche 1 bis 11 ausgebildet ist.
